# EUROPEAN PATENT SPECIFICATION

(11) **EP 1 498 690 B1**
(45) Date of publication and mention of the grant of the patent: **01.08.2012**
(21) Application number: 03719157.4
(22) Date of filing: 22.04.2003
(51) Int. Cl.: G01B 11/06, G01B 9/02, G02B 6/02

(54) **THICKNESS MEASURING DEVICE**
DICKEMESSEINRICHTUNG
DISPOSITIF DE MESURE D'EPAISSEUR

(30) Priority: 25.04.2002 JP 2002124599
(43) Date of publication of application: 19.01.2005
(73) Proprietor: HAMAMATSU PHOTONICS K.K., Hamamatsu-shi, Shizuoka-ken 435-8558 (JP)
(72) Inventor: TAKAHASHI, Teruo, Hamamatsu-shi, Shizuoka 435-8558 (JP); SHIMIZU, Tohru, Hamamatsu-shi, Shizuoka 435-8558 (JP)
(74) Representative: Frost, Alex John
(86) International application number: PCT/JP2003/005113
(87) International publication number: WO 2003/091659

(56) References cited:
- EP-A1- 1 258 916
- WO-A1-01/16556
- WO-A1-01/59830
- WO-A1-01/84620
- JP-A- 8 029 641
- JP-A- 10 221 014
- JP-A- 2001 004 538
- JP-A- 2001 264 246
- US-A- 5 206 924
- US-A- 5 255 428

## Description

### Technical Field

The present invention relates to a thickness measuring device for measuring the thickness of a semiconductor wafer, etc., more specifically, a thickness measuring device using a Michelson interferometer.

### Background Art

A thickness measuring device which uses a Michelson interferometer as a device for measuring the thickness of a semiconductor wafer, etc., in a noncontact manner is generally known. For example, in the apparatus disclosed in JP H10-325795A, as shown in Fig. 10, light emitted from a light source 301 is condensed by a condensing lens 303 and irradiated onto a object 308 to be measured, the object to be measured 308 or the condensing lens 303 and a reference light mirror 306 are moved, and the intensities of interference light on the front and back faces are measured by a photodetector 304, and from movement distances of the object 308 to be measured or the condensing lens 303 and the reference light mirror 306 when the intensity becomes maximum, the refractive index and thickness of the object 308 to be measured are measured.

European patent application no. 01900776.4 describes a thickness measuring apparatus and method which uses a Michelson interferometer which has an optical system constructed by two optical cables connected by an optical coupler.

Japanese patent application no. 10 221014 describes an optical wave guide path displacement sensor for emitting an optical wave oscillated from a laser light source from the end of a directional coupler type optical wave guide element to an object to the measured. An emission and receiving module is connected to the optical wave guide element by a polarization wave face holding optical fiber.

Japanese patent application no. 2001 264246 describes an interferometer having a transmission type optical delay line without a mirror.

US patent application no. 5206924 describes a fiber optic Michelson sensor wherein an optical source provides light of a first polarization state to a polarization selective element. Output light from the polarization selective element passes through a length of optical fiber into a Michelson interferometric sensor which utilizes a Faraday rotator/mirror assembly, that is coupled to distal ends of sensing and reference arms of the Michelson interferometer, to provide for the passive elimination of polarization fading. The polarization selective element at the output of the optical source provides isolation of the optical source from the Michelson interferometer sensor.

International patent application no. WO 01/16556 describes an interferometer utilizing polarization-preserving optical systems by plane polarized beams which are deviated through preselected angles without changing their linear state of polarization.

### Disclosure of the Invention

In order to increase the measuring accuracy in such a measuring device, it is required that an optical system in a Michelson interferometer 302 is accurately arranged, and this results in an increase in size of the apparatus or complicated adjustment of the system.

Therefore, an object of the invention is to provide a thickness measuring device which uses a Michelson interferometer, has a compact structure, and enables simple adjustment while enabling measurement with high accuracy.

In order to solve the object mentioned above, the thickness measuring device which uses a Michelson interferometer is defined in claim 1.

By forming the principle part of the optical system of the Michelson interferometer by optical fibers, the device becomes compact and the freedom of arrangement is increased. By using polarization-preserving optical fibers as the optical fibers, the plane of polarization is maintained even when the degree of bending the optical fibers is changed, so that stable generation of interference light becomes possible. Furthermore, connection of the polarization-preserving optical fibers by an optical connector makes it easy to manufacture and adjust the apparatus. Since this optical connector is structured so that the optical fibers to be connected can be rotated relatively, it can reliably match the direction of the plane of polarization between the optical fibers. Furthermore, by arranging a polarizer on the optical axis between the optical coupler and the mirror in the reference optical system, noise components generated due to the rotation of the plane of polarization outside the optical coupler are cut and interference light signals can be detected with high accuracy.

It is preferable that at least one of the optical connectors has a polarizer disposed so as to rotate around the optical axis between the end faces of the optical fibers to be connected. By arranging a polarizer between the end faces of the optical fibers to be connected at the connector part, noise components are eliminated and measurement with high accuracy becomes possible.

### Brief Description of the Drawings

Fig. 1 is a schematic construction view showing an embodiment of a thickness measuring device relating to the invention;
Fig. 2 is an exploded perspective view of the optical connector used in the apparatus of Fig. 1, and Fig. 3 is a sectional construction view of the same;

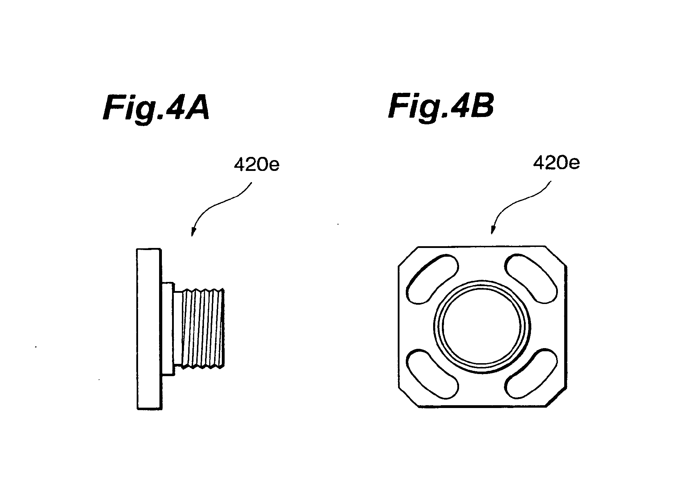

Fig. 4A is a sectional view of an adapter part of the optical connector of Fig. 2, and Fig. 4B is a front view of the same;
Fig. 5 is a construction view of a polarizer of the apparatus of Fig. 1;
Fig. 6 is a drawing describing the condition of light reflection on the semiconductor wafer;
Fig. 7A through Fig. 7C are drawings describing the output difference of a photodetector depending on the relationship in arrangement of main axes of polarization by comparison;
Fig. 8 is a drawing describing a signal intensity example when the apparatus of Fig. 1 is modified;
Fig. 9A is a drawing showing a modified example of the Michelson interferometer of Fig. 1, and Fig. 9B is a schematic view of the Michelson interferometer of Fig. 1; and

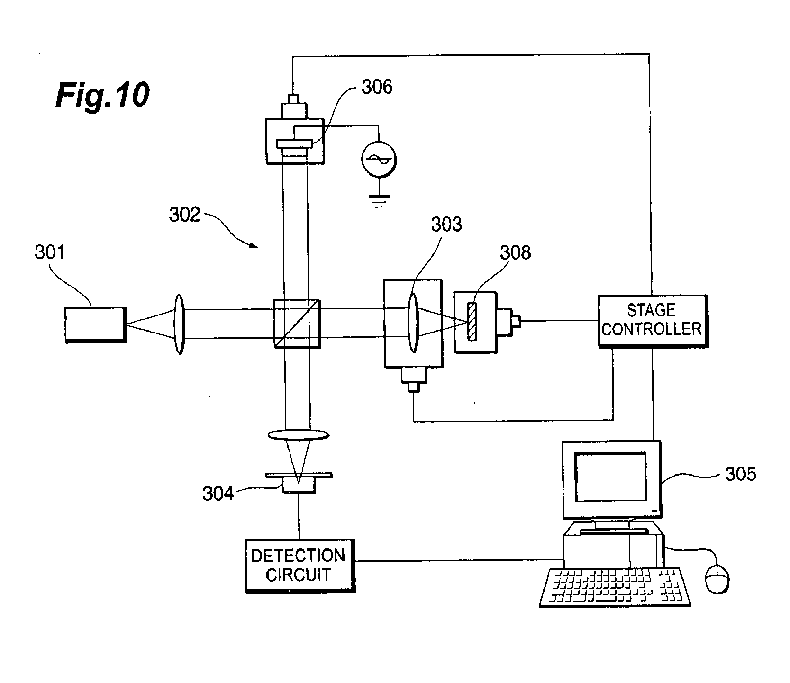

Fig. 10 is a drawing showing a conventional thickness measuring device.

### Best Modes for Carrying Out the Invention

Hereinafter, a preferred embodiment of the invention is described with reference to the accompanying drawings. To facilitate the comprehension of the explanation, the same reference numerals denote the same parts, where possible, throughout the drawings, and a repeated explanation will be omitted.

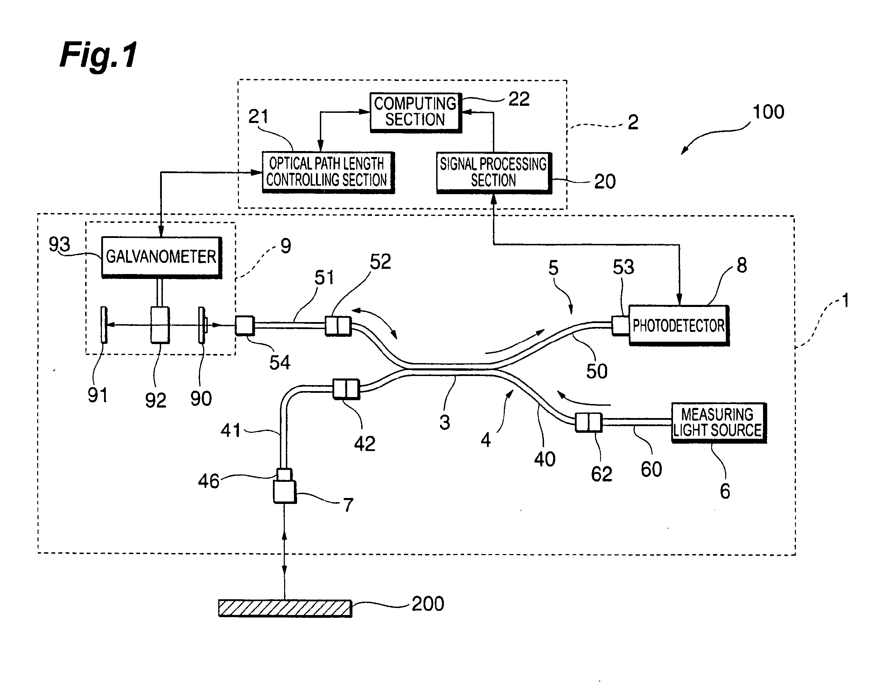

Fig. 1 is a schematic construction view showing an embodiment of the thickness measuring device according to the present invention. This thickness measuring device 100 is a Michelson interferometer type noncontact thickness meter which irradiates a semiconductor wafer 200 as a object to be measured with measuring light and uses a change in light intensity of interference light obtained by interference between reflected light from the semiconductor wafer 200 and reference light reflected by a reference optical system to measure the thickness of the semiconductor wafer 200.

This thickness measuring device 100 comprises a Michelson interferometer 1 and a calculation and control section 2 which controls the Michelson interferometer and calculates the thickness from the results of detection.

The Michelson interferometer 1 has an optical system of its principle part formed of two optical cables 4 and 5 connected by an optical coupler 3, and at one end of the optical cable 4, a measuring light source 6 is disposed, and at the other end, a probe head 7 which receives reflected light of measuring light irradiated onto the wafer 200 is disposed. On the other hand, at one end of the optical cable 5, a photodetector 8 is disposed, and at the other end, a reference optical system 9 is disposed.

As the measuring light source 6, a low coherence light source such as an infrared SLD (Super Luminescent Diode), etc., which generates light with a wavelength of, for example, 1.3 µm is preferably used. Furthermore, as the photodetector 8, any type can be used as long as it can measure a temporal change in light intensity, and in addition to a photoelectron counter, various photodetectors can be used.

The optical cable 4 is formed by joining polarization-preserving optical fibers 40 and 41 by an optical connector 42. The other end of the optical fiber 40 is connected to the outputting polarization-preserving optical fiber 60 extending from the measuring light source 6 by the optical connector 62. On the other hand, the other end of the optical fiber 41 is connected to the probe head 7 by an optical plug 46.

Another optical cable 5 is formed by joining polarization-preserving optical fibers 50 and 51 by an optical connector 52. The other end of the optical fiber 50 is connected to the input terminal of the photodetector 8 via an optical plug 53. On the other hand, the other end of the optical fiber 51 is also provided with an optical plug 54, and on its optical path, a reference optical system 9 is disposed.

The optical coupler 3 is formed by melting and joining the optical fiber 41 and the optical fiber 50 together. Such a polarization-preserving optical fiber coupler is disclosed in "Fabrication of polarization-preserving optical fiber couplers by CO2 laser irradiation method," Tetsuya Gamano, et. al., (Digest No. 3 of 61st Annual Meeting, The Japan Society of Applied Physics, 4p-Q-2 (Sept. 2000), etc.

The reference optical system 9 is an optical system which reflects and returns incident light, which has a function for changing the optical path length inside. In detail, the reference optical system comprises a polarizer 90 disposed at the optical plug 54 side so as to rotate around the optical axis, a mirror 91 disposed at the end of the optical path opposite the polarizer 90, a glass substrate 92 disposed between the polarizer 90 and the mirror 91, and a galvanometer 93 which periodically oscillates the glass substrate 92.

The calculation and control section 2 comprises a signal processing section 20 for processing signals transmitted from the photodetector 8, an optical path length control section 21 for controlling the galvanometer 93, and a calculation section 22 for calculating the thickness of the wafer 200 on the basis of the results of processing of the signal processing section 20. These are divided by means of hardware, or when a personal computer or an EWS is used as the calculation and control section 2, these functions can be realized by software.

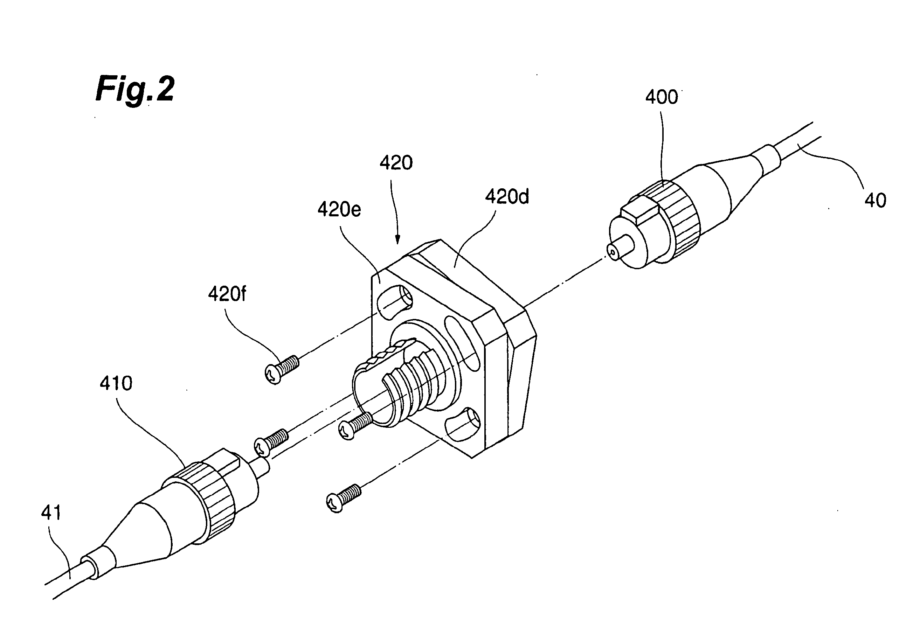

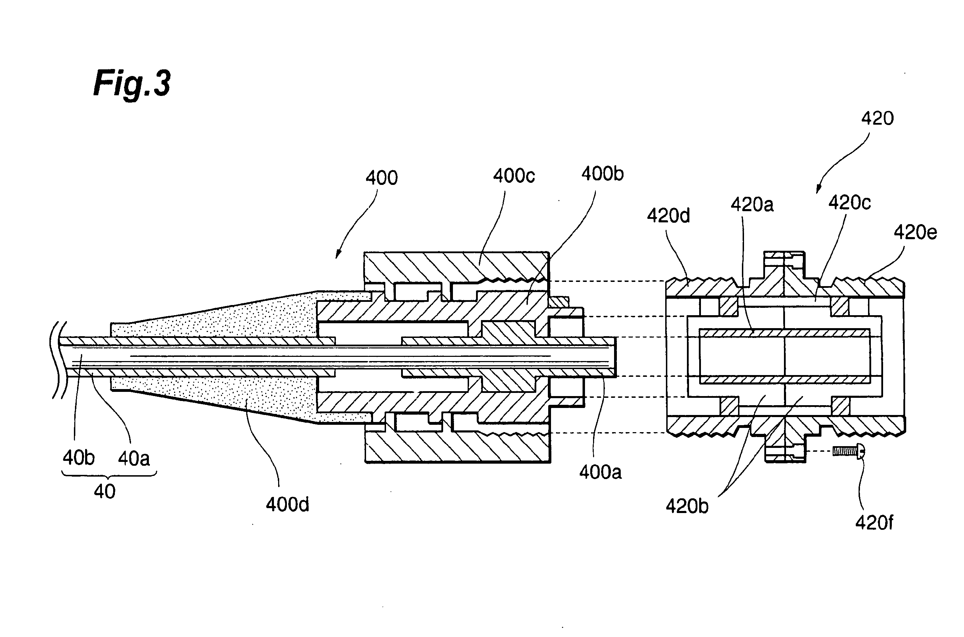

The optical connectors 42, 52, and 62 have a common construction, and the construction is described by taking the optical connector 42 as an example, hereinafter. Fig. 2 is an exploded perspective view of this optical connector, and Fig. 3 is a sectional construction view. This optical connector 42 comprises plugs 400 and 410 attached to the ends of the respective optical fibers 40 and 41 and an adapter 420 disposed between these. The basic construction complies with an F01 type single channel optical fiber connector of JIS C 5970, in which necessary improvement relating to the invention is added to the structure of the adapter 420.

The plug 400 is attached to the end of the optical fiber 40 from which a coating 40a has been stripped off, and comprises a ferrule 400a for fixing the optical fiber 40, a frame 400b for surrounding and fixing the ferrule 400a, a connecting nut 400c for screwing provided in the axis direction around the frame 400b, and a hood 400d for fixing the coated optical fiber at the optical fiber 40 side from the frame 400b. The plugs 410, 46, 53, and 54 also have the same construction.

On the other hand, the adapter 420 has a construction similar to that of FCN-AA-001 made by DDK Ltd., which comprises a sleeve 420a, two sleeve holders 420b shaped equal to each other, two housings 420d and 420e shaped differently from each other, and two through four machine screws 420f. The adapter 420 and FCN-AA-001 according to the present invention are structured differently from each other at the side of the housing 420e.

In the housing 420e, the screw holes which the machine screws 420f penetrate have a sectional shape that is not circular as in FCN-AA-001 but is like a broad bean. Namely, semicircles are disposed on both sides of two arcs around the center of the inner cylinder of the housing 420e, and the angle of the arc is set to 35 degrees. The radius of the semicircle is equal to that of the conventional circular screw hole. Accordingly, the seating surface is also sunk into a shape roughly similar to the screw hole. With this construction, while the plugs 400 and 410 are attached to both sides of the adapter 420, the plug 400 can be rotated relatively to the plug 410.

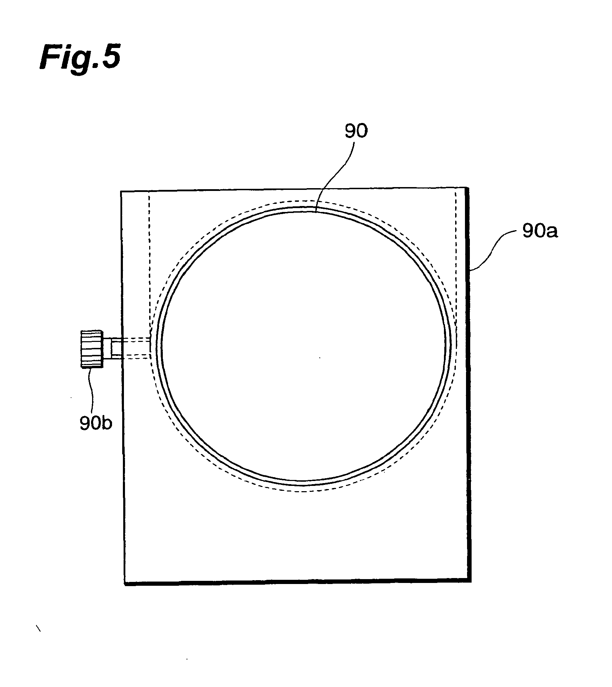

In order to enable the polarizer 90 to rotate as described above, as shown in Fig. 5, the polarizer 90 formed of a circular polarizing filter is disposed in the hole of the holder 90a and fixed by a set screw 90b as appropriate. Or the filter is formed to be adjustable in angle by using a gear.

Next, thickness measurement of a semiconductor wafer 200 by using this thickness measuring device 100 is described in detail. Light emitted from the measuring light source 6 is guided to the optical fiber 60, the optical connector 62, and the optical fiber 40. The light guided to the optical fiber 40 is partially made incident on the optical fiber 50 by the optical coupler 3, and guided to the reference optical system 9 via the optical connector 52, the optical fiber 51, and the optical plug 54. The light that has been made incident on the reference optical system 9 is reflected by the mirror 91 after passing through the polarizer 90 and the glass substrate 92, and then passes through the glass substrate 92 and the polarizer 90 and is made incident on the optical fiber 51 again via the optical plug 54, and thereafter, the light is guided to the optical fiber 50 via the optical connector 52.

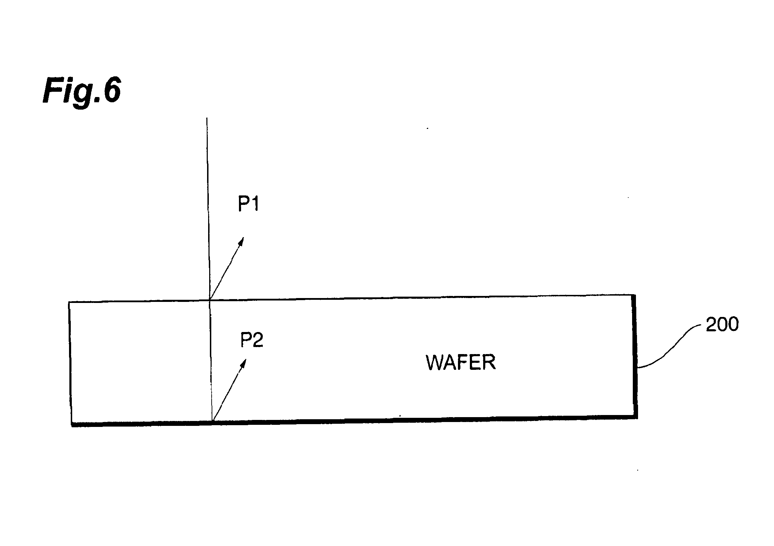

On the other hand, the light guided straight through the optical fiber 40 is guided to the probe head 7 via the optical connector 42, the optical fiber 41, and the optical plug 46, and irradiated onto the wafer 200. On the wafer 200, due to the difference in refractive index between the atmosphere and the wafer 200, as shown in Fig. 6, the incident light is reflected by two points of the front and back surfaces. In the figure, in order to make it easy to understand the reflecting positions, the light that has been made incident vertically is shown as if it is reflected diagonally, however, in actuality, the light made incident vertically is reflected perpendicularly. The reflected light is guided in reverse through the optical path of incidence, made incident on the probe head 7, guided to the optical fiber 40 via the optical plug 46, the optical fiber 41, and the optical connector 42, and then reaches the optical coupler 3 portion.

In the optical coupler 3, the light that was reflected by the wafer 200 and returned to the optical fiber 40 and the light that reciprocated across the reference optical system 9 and returned to the optical fiber 50 are multiplexed and interfere with each other to generate interference light. The interference light thus generated is guided through the optical fiber 50 and transmitted to the photodetector 8 via the optical plug 53. The photodetector 8 converts the inputted intensity signal of the interference light into an electrical signal, etc., and transmits the signal to the signal processing part 20. The calculation part 22 calculates the thickness of the wafer 200 on the basis of a temporal intensity change obtained in the signal processing part 20 and the results of control of the optical path length control part 21.

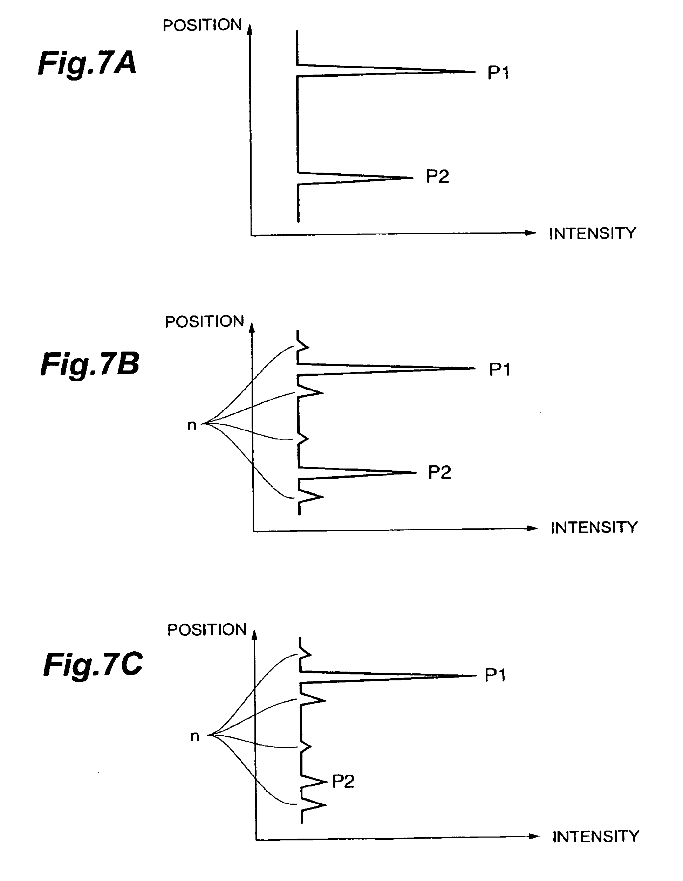

Herein, in the optical coupler 3, the interference light generated when the reference light and the reflected light coincide with each other in timing of reach becomes maximum in intensity when the polarization axes of the reference light and the reflected light coincide with each other. In the thickness measuring device 100, since the polarization-preserving optical fibers are used for the most part of the waveguide, inside the same optical fiber (including the inside of the optical coupler 4), the plane of polarization is preserved. However, when the directions of the main axes of polarization of the optical fibers are different from each other at the optical connector portion, the straight polarized light in the direction of the main axis of polarization in the optical fiber of the upstream side is split into two components of straight polarized light in the direction of the main axis of polarization and straight polarized light orthogonal to this in the optical fiber at the downstream side. Then, the refractive index is different between the direction of the main axis of polarization and the orthogonal direction, so that the propagation speed differs between these, and as light is guided through the optical fiber at the downstream side, the polarized light beam deviates. As a result, the reference light and the reflected light are generated in timing different from in the case where the main axes of polarization match each other, and accordingly, the generated interference light becomes noise. Particularly, when the transmittance of the semiconductor wafer 200 is low, the intensity of the reflected light itself from the back surface of the wafer 200 is low while the intensity of the reflected light from the front surface is high, and as a result, noise generated according to the reflected light from the front surface increases, so that the noise may be more intensive than the reflected light from the back surface, and this makes measurement difficult. Fig. 7A through Fig. 7C show the changes in output of the photodetector depending on the positional relationship of the main axes of polarization. When the main axes of polarization all match each other, the signal outputted from the photodetector 8 temporally changes as shown in Fig. 7A, and only two of the signal P1 corresponding to the reflection from the front surface and the signal P2 corresponding to the reflection from the back surface are obtained. However, when the main axes of polarization do not match each other, as shown in Fig. 7B, before and after the original signals P1 and P2, noise n occurs. Then, as the impurity concentration of the semiconductor wafer 200 becomes higher, light absorption becomes greater, and as a result, the noise components produced by the signal P1 increase, so that it becomes difficult to distinguish the signal P2 and the noise components n as shown in Fig. 7C.

Therefore, in this thickness measuring device 100, it is made possible to independently adjust the relative positions of the optical fibers to be connected by the optical connectors 42, 52, and 62 with respect to the optical axis. Thereby, by restraining the occurrence of noise by matching the main axes of polarization, measurement with high accuracy can be carried out. Furthermore, by making the angle of rotation of the polarizer 90 adjustable, noise occurring due to the rotation of the plane of polarization within the optical path in the space of the reference optical system 9 is restrained.

The method for this adjustment is described next. First, the thickness measuring device 100 is operated by arranging a reference medium in place of the semiconductor wafer 200. As this reference medium, a medium that has a low transmittance and high reflectance on the front and back surfaces, for example, a glass substrate, etc., is preferable.

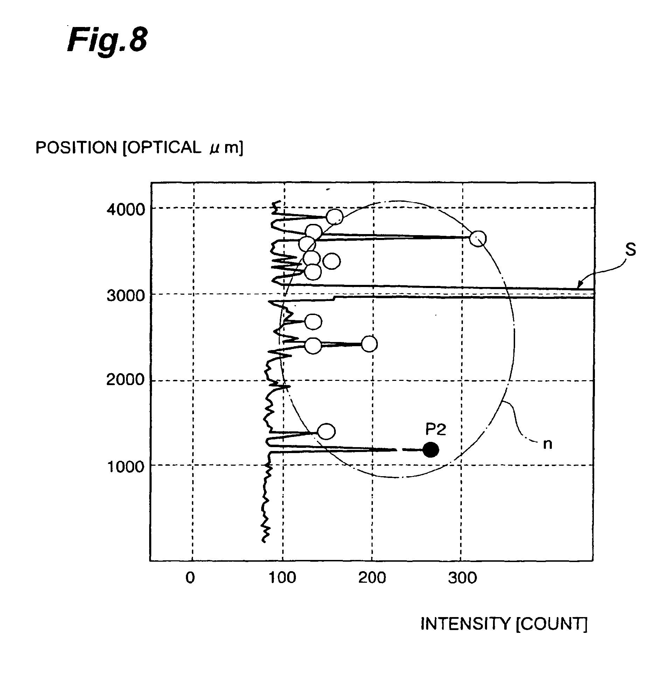

At this point, the machine screws of the adapter forming each connector are loosened so as to allow the attached plugs to relatively rotate. In this condition, the angle between the housings in each connector and the angle of rotation of the polarizer are alternately adjusted to reduce the noise while the change in intensity of the signal outputted from the photodetector 8 is monitored. Fig. 8 shows a signal intensity example. Noise that changes its intensity differs depending on the polarizer, so that adjustment is carried out by focusing on a signal component with a great intensity change (noise). However, it is influenced by other connectors and the change in angle of rotation of the polarizer, so that it is preferable that the adjustment is repeated until all noise components n become equal to or less than the permissible limit. Furthermore, the noise appears basically symmetrically for the original signal peaks S and P2, however, it is not strictly symmetrical, and even during adjustment, when one noise is reduced, the other one may become greater. However, noise that is highly necessary to be eliminated is the noise n that appears after the peak signals S and P2, that is, the noise n appearing below the peak signals S and P2 in Fig. 8, so that adjustment is carried out by focusing on this noise n.

After the adjustment, the optical fibers are fixed at the adjusted angles by tightening the machine screws. Performing this work while the signal intensity is monitored is preferable since it can be prevented that the angle deviates carelessly according to the tightening. Furthermore, by removing the plugs from the adapter of the side rotated after the adjustment and reattaching them, twisting of the optical fibers are eliminated and noise can be further reduced. This adjustment is not necessary for each measurement, and is carried out only in the case where the optical system is moved.

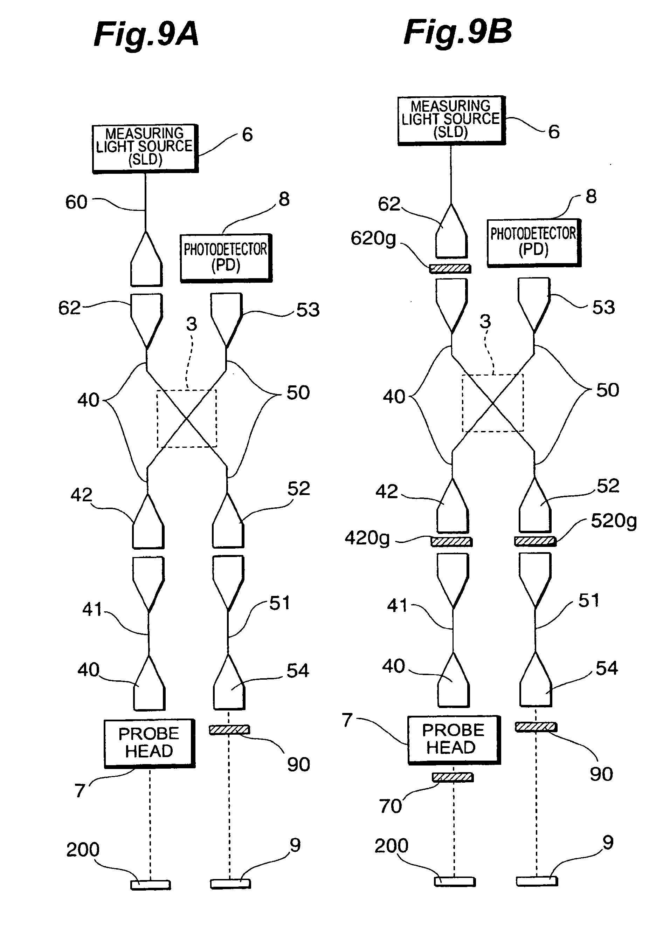

Fig. 9B is a figure showing a modified example 1a of the Michelson interferometer 1 of the thickness measuring device 100 according to the present invention. For comparison, the Michelson interferometer of Fig. 1 is shown in Fig. 9A. In this Michelson interferometer 1a, polarizers 420g, 520g, 620g, and 70 disposed to be rotatable around the optical axis are provided between the plugs of the connectors 42, 52, and 62 and on the front end of the probe head 7. In order to realize this arrangement, in place of the adapter 420 shown in Fig. 3, an adapter having a polarizer 420 disposed at the center is installed or a polarizer is disposed between two receptacles. In this case, by cutting unnecessary components by a polarization filter, the S/N ratio is improved and it becomes possible to measure an object with a low transmittance. In this interferometer, polarization filters are disposed at all possible positions, however, the polarization filter is necessary at least at one of these positions.

In the description given above, measurement of the thickness of a semiconductor wafer is taken as an example, however, the invention is also applicable to measurement of thickness of other optical transparent media.

### Industrial Applicability

The thickness measuring device according to the present invention can be preferably used for thickness measurement of semiconductor wafers and other optical transparent media.

## Claims

1. A thickness measuring device (100) including a Michelson interferometer (1), wherein
said Michelson interferometer (1) has an optical system constructed by two optical cables (4, 5) connected by an optical coupler (3) and further has a reference optical system (9) including a mirror (91);
the thickness measuring device being
**characterized in that** :
- the coupler (3) is a polarization-preserving optical coupler;
- each optical cable (4, 5) is constituted with polarization-preserving optical fibers (40, 41, 50, 51) connected by an optical connector (42, 52); and
- each optical connector (42, 52) is adjustable in relative position by rotating the polarization-preserving optical fibers (40, 41, 50, 51) to be connected relatively around the optical axis, and has a polarizing filter (90) disposed on the optical axis at least between the optical coupler (3) and the mirror (91) in the reference optical system (9), in a rotatable manner around the optical axis to guide the light reflected by the mirror (91) and passed through the polarizing filter (90) to the optical coupler (3).

2. The thickness measuring device (100) according to Claim 1, wherein at least one of the optical connectors (42, 52) has a polarizer (420g, 520g) disposed in a rotatable manner around the optical axis between the end faces of the optical fibers (41, 51) to be connected as an axis.

## Patentansprüche

1. Vorrichtung zur Dickemessung (100), die ein Michelson-Interferometer einschließt, wobei
das Michelson-Interferometer (1) ein optisches System, das mit zwei optischen Kabeln (4, 5) ausgebildet ist, die durch einen optischen Koppler (3) miteinander verbunden sind, und weiterhin ein optisches Referenzsystem (9) aufweist, das einen Spiegel (91) einschließt;
wobei die Vorrichtung zur Dickemessung **dadurch gekennzeichnet ist, dass**:
- der Koppler (3) ein polarisationserhaltender optischer Koppler ist;
- jedes optische Kabel (4, 5) mit polarisationserhaltenden optischen Fasern (40, 41, 50, 51) konstruiert ist, die durch einen optischen Konnektor (42, 52) miteinander verbunden sind;
und
- jeder optische Konnektor (42, 52) in relativer Position verstellbar ist, indem die miteinander zu verbindenden polarisationserhaltenden optischen Fasern (40, 41, 50, 51) relativ zueinander um die optische Achse gedreht werden,
und dass sie einen Polarisationsfilter (90) aufweist, der in der optischen Achse mindestens zwischen dem optischen Koppler (3) und dem Spiegel (91) in dem optischen Referenzsystem (9) um die optische Achse drehbar angeordnet ist, um das Licht, das von dem Spiegel (91) reflektiert wird und das durch den Polarisationsfilter (90) tritt, zu dem optischen Koppler (3) zu leiten.

2. Vorrichtung zur Dickemessung (100) nach Anspruch 1, wobei mindestens einer der optischen Konnektoren (42, 52) einen Polarisator (420g, 520g) aufweist, der um die optische Achse drehbar zwischen den Endflächen der als eine Achse zu verbindenden optischen Fasern (41, 51) angeordnet ist.

## Revendications

1. Dispositif de mesure d'épaisseur (100) incluant un interféromètre de Michelson (1), où
ledit interféromètre de Michelson (1) possède un système optique formé par deux câbles optiques (4, 5) reliés par un coupleur optique (3) et possède en outre un système optique de référence (9) incluant un miroir (91);
le dispositif de mesure d'épaisseur étant **caractérisé en ce que**:
- le coupleur (3) est un coupleur optique de préservation de polarisation;
- chaque câble optique (4, 5) est réalisé avec des fibres optiques de préservation de polarisation (40, 41, 50, 51) reliées par un connecteur optique (42, 52); et
- chaque connecteur optique (42, 52) est ajustable dans la position relative en faisant tourner les fibres optiques de préservation de polarisation (40, 41, 50, 51) pour être connectées relativement autour de l'axe optique, et possède un filtre de polarisation (90) disposé sur l'axe optique au moins entre le coupleur optique (3) et le miroir (91) dans le système optique de référence (9), d'une manière tournante autour de l'axe optique pour guider la lumière réfléchie par le miroir (91) et passant à travers le filtre de polarisation (90) au coupleur optique (3).

2. Dispositif de mesure d'épaisseur (100) selon la revendication 1, dans lequel au moins un des connecteurs optiques (42, 52) possède un polariseur (420g, 520g) disposé d'une manière tournante autour de l'axe optique entre les faces d'extrémité des fibres optiques (41, 51) pour être connecté comme un axe.
